# EUROPEAN PATENT SPECIFICATION

(11) **EP 1 636 994 B1**
(45) Date of publication and mention of the grant of the patent: **12.08.2009**
(21) Application number: 04755901.8
(22) Date of filing: 23.06.2004
(51) Int. Cl.: H04N 7/26, G10L 19/00

(54) **DECODING METHOD AND APPARATUS FOR DETECTION OF WATERMARKS IN A COMPRESSED VIDEO BITSTREAM**
DECODIERUNGSVERFAHREN UND -VORRICHTUNG ZUM ERKENNEN VON WASSERZEICHEN IN EINEM KOMPRIMIERTEN VIDEOBITSTROM
PROCEDE DE DECODAGE ET DISPOSITIF POUR DETECTER DES FILIGRANES DANS UN FLUX BINAIRE VIDEO COMPRIME

(30) Priority: 25.06.2003 US 482302 P
(43) Date of publication of application: 22.03.2006
(73) Proprietor: Thomson Licensing, 92100 Boulogne-Billancourt (FR)
(72) Inventor: BOYCE, Jill, MacDonald, Manalapan, New Jersey 07726 (US); GIRELLINI, Daniel, Richard, New Brunswick, New Jersey 08901 (US); YIN, Peng, West Windsow, New Jersey 08550 (US)
(74) Representative: Patentanwälte Hofstetter, Schurack & Skora
(86) International application number: PCT/US2004/020029
(87) International publication number: WO 2005/004493

(56) References cited:
- WO-A-01/67671
- US-A1- 2001 003 553

## Description

### CROSS-REFERENCE TO RELATED APPLICATION

This application claims the benefit of U.S. Provisional Application Serial No. 60/482,302 (Attorney Docket No. PU030163), filed June 25, 2003 and entitled "METHOD AND APPARATUS FOR INSERTION AND DETECTION OF FINGERPRINTS IN A COMPRESSED VIDEO BITSTREAM".

### FIELD OF THE INVENTION

The present invention is directed towards video encoders and decoders, and more particularly, towards an apparatus and method for watermark insertion and/or detection.

### BACKGROUND OF THE INVENTION

It is often desirable to be able to identify the source of compressed video bitstreams, such as, for example, to identify the unauthorized distributors of copyrighted material. The encoder used to create a bitstream can be uniquely identified by insertion of a fingerprint (or watermark) during the encoding process. Ideally, the watermark insertion process should be of low additional computational complexity, and the watermark should be visually undetectable and have a very low impact on coding efficiency.

Numerous techniques have been proposed for inserting invisible robust and/or fragile watermarks into compressed images and video. One class of techniques generates a watermark signal in the Discrete Cosine Transform (DCT), wavelet or other transform domains, based on Human Visual System (HVS) sensitivity to frequency response.

Some systems operate on quantized DCT transform coefficients of JPEG or MPEG compressed images/video, where the Least Significant Bit (LSB) of certain transform coefficients is adjusted to match the parity of a watermark signal bit.

Accordingly, there is a need for an encoder and decoder with low additional computational complexity for insertion and detection of substantially visually undetectable watermarks.

Systems for data embedding in digital telephone signals are known, see, e.g., WO 01/67671A2. Signal recording/producing methods and systems are also known, see e.g., United States Patent Application No. 2001/0003553A1.

### SUMMARY OF THE INVENTION

These and other drawbacks and disadvantages of the prior art are addressed by an apparatus and method for insertion and detection of substantially visually undetectable watermarks.

In accordance with the principles of the present invention, a decoder for detecting watermarked video content is disclosed; the decoder including a detection unit for detecting bits of the digital fingerprint in blocks of the video bitstream as a function of the parity of the number of coded coefficients in the block, and an inverse-quantization unit in signal communication with the detection unit for inverse-quantizing coefficients of the video bitstream.

These and other aspects, features and advantages of the present invention will become apparent from the following description of exemplary embodiments, which is to be read in connection with the accompanying drawings.

### BRIEF DESCRIPTION OF THE DRAWINGS

The present invention may be better understood in accordance with the following exemplary figures, in which:
Figure 1 shows a flowchart for a block encoder;
Figure 2 shows a flowchart for a block encoder with fingerprint insertion in accordance with the principles of the present invention;
Figure 3 shows a flowchart for a block encoder with forced fingerprint insertion in accordance with the principles of the present invention;
Figure 4 shows a flowchart for a block encoder with required fingerprint insertion in accordance with the principles of the present invention;
Figure 5 shows a flowchart for a block decoder with fingerprint detection in accordance with the principles of the present invention;
Figure 6 shows a block diagram for a video encoder having a block encoder for fingerprint insertion in accordance with the principles of the present invention; and
Figure 7 shows a block diagram for a video decoder having a block decoder for fingerprint detection in accordance with the principles of the present invention.

### DETAILED DESCRIPTION OF PREFERRED EMBODIMENTS

Embodiments of the present invention provide a method and apparatus with low additional computational complexity for insertion and detection of substantially visually undetectable watermarks. In the description that follows, an encoder and decoder may be collectively referred to as a CODEC for purposes of simplicity, although method and apparatus embodiments may be capable of only encoding, only decoding, or both encoding and decoding. Like elements may be indicated by like reference numerals having figure-specific digits in the hundreds position of the various figures. The terms "watermark" and "fingerprint" are used interchangeably herein.

Popular video compression standards, such as MPEG-2, MPEG-4, and JVT contain intra-coded I frames, and inter-coded P and B frames. Random access points in compressed video bitstreams may be made possible by grouping pictures into Groups of Pictures (GOPs) in MPEG-2, or Independent Decoder Refresh periods (IDRs). In these standards, the coded pictures are divided into non-overlapping blocks. Each block is transformed, using a Discrete Cosine Transform (DCT) or similar transformation, quantized, and run-length coded, such that only the non-zero quantized coefficients are coded. The quantization process may be uniform or nonuniform, and may employ dead-zones and/or thresholding. For example, the JVT JM reference software employs a threshold by which if the number of non-zero coefficients after a first stage of a quantization process is less than a threshold value, T, a second stage of the quantization process is applied to force all coefficients in the block to be quantized to zero.

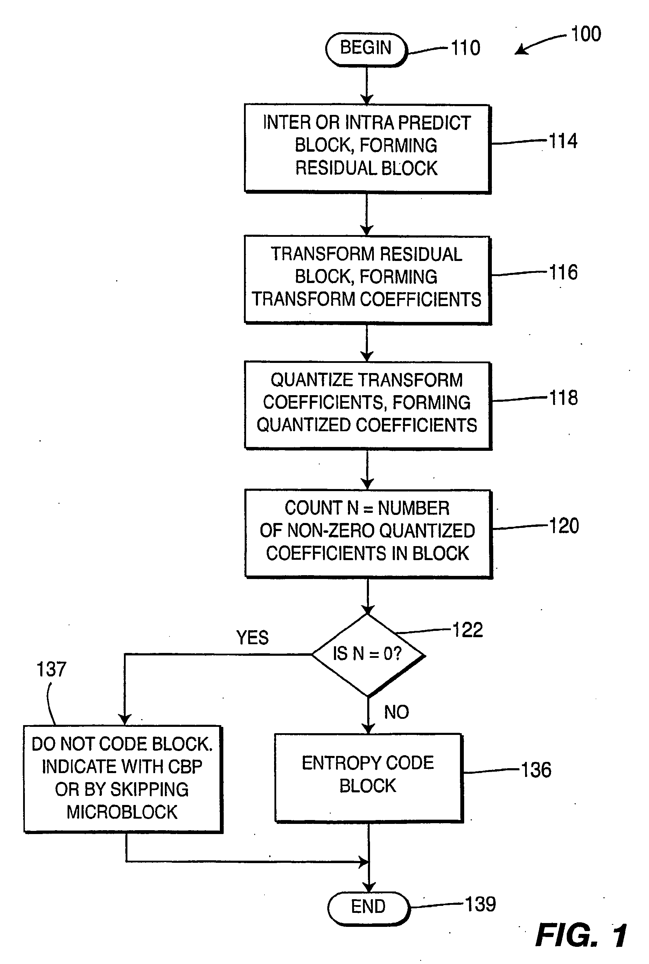

As shown in Figure 1, a block encoder is indicated generally by the reference numeral 100. The block encoder 100 includes a begin block 110 that passes control to function block 114. The function block 114 predicts a block using Intra or Inter prediction, forming a residual block, and passes control to a function block 116. The function block 116, in turn, transforms the residual block, forming transform coefficients, and passes control to a function block 118. The function block 118 quantizes the transform coefficients, forming quantized coefficients, and passes control to a function block 120. The function block 120, in turn, initializes a variable N to the number of non-zero quantized coefficients in the block, and passes control to a decision block 122. The decision block 122 checks whether N is zero, and if N is not zero, passes control to a function block 136 which entropy codes the block, and then passes control to an end block 139. If, however, N is equal to zero, the decision block 122 passes control to a function block 137, which does not code the block and either indicates the non-coded block with a coded block pattern (CBP) or by skipping the macroblock. The function block 137, in turn, passes control to the end block 139.

Thus, Figure 1 shows a flowchart of the block encoding process for a block-based video encoder. An inter or intra prediction is formed for the block, and subtracted from the block to form a residual block. For an inter prediction, motion compensation is generally used. Intra prediction is done differently for different coding standards, but always uses information from neighboring blocks or macroblocks in the same coded picture. The residual block is then transformed, using a block transform, to form transform coefficients. The transform coefficients are quantized, to form quantized coefficients. The number of quantized coefficients whose values are non-zero, N, are counted. If N is equal to zero, the block is not coded. If other blocks in the same macroblock are coded, the non-coding of the block is indicated using a coded block pattern (CBP). If all blocks in the same macroblock are not coded, the macroblock is skipped. If the block is to be coded, the non-zero coefficients are entropy coded using runlength coding.

Embodiments of the present invention provide a low-complexity method of inserting and detecting a unique fingerprint in compressed video streams. A method for insertion and detection of a fragile digital fingerprint (or watermark) in a compressed video bitstream is described, in order to be able to identify the encoder used to create the compressed video bitstream. The method is particularly well suited to inclusion in an MPEG AVC/ ITU H.264 bitstream. One bit of a unique identification code (fingerprint) is embedded into a coded block in the bitstream by matching the parity of the number of coded coefficients in the block to the bit value of the code.

This embodiment allows a unique fingerprint to be embedded into a compressed video bitstream by a video compression encoder, during the encoding process. A unique fingerprint sequence, FSEQ, of length L bits is created, to uniquely identify the video encoder.

During the video compression encoding process, one bit from the fingerprint sequence is embedded into a coded block, by forcing the parity of the total number of coded (non-zero) coefficients for the block to match the bit of the fingerprint sequence. The total number of coefficients can refer either to the AC coefficients only, or to the AC and DC coefficients. For a 0 bit, an even number of non-zero coefficients must be coded, while for a 1 bit an odd number of non-zero coefficients must be coded.

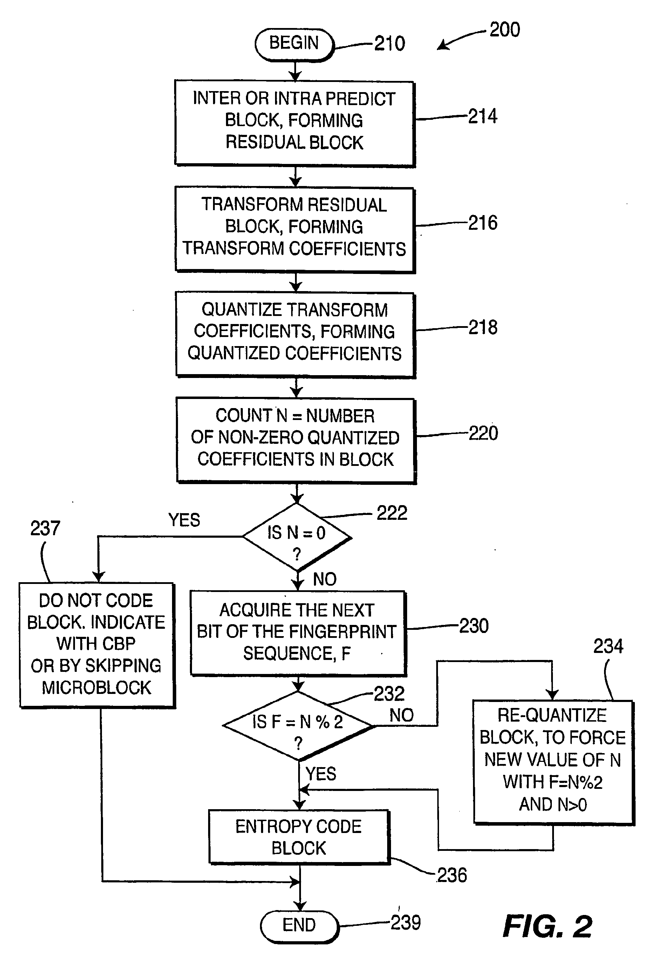

Turning to Figure 2, a block encoder with fingerprint insertion is indicated generally by the reference numeral 200. The block encoder 200 includes a begin block 210 that passes control to function block 214. The function block 214 predicts a block using Intra or Inter prediction, forming a residual block, and passes control to a function block 216. The function block 216, in turn, transforms the residual block, forming transform coefficients, and passes control to a function block 218. The function block 218 quantizes the transform coefficients, forming quantized coefficients, and passes control to a function block 220.

The function block 220, in turn, initializes a variable N to the number of non-zero quantized coefficients in the block, and passes control to a decision block 222. The decision block 222 checks whether N is zero, and if N is equal to zero, passes control to a function block 237, which does not code the block and either indicates the non-coded block with a coded block pattern (CBP) or by skipping the macroblock. The function block 237, in turn, passes control to an end block 239. If, however, N is not equal to zero, the decision block 222 passes control to a function block 230, which acquires the next bit of the fingerprint sequence F, and passes control to a decision block 232. The decision block 232 checks whether the fingerprint sequence F is equal to N modulo 2, and if F is equal to N modulo 2, passes control to a function block 236 which entropy codes the block, and then passes control to the end block 239. If, however, F is not equal to N modulo 2, the decision block 232 passes control to a function block 234, which re-quantizes the block to force a new value of N where F is equal to N modulo 2 and N is greater than zero. The function block 234, in turn, passes control to the function block 236, which is described above.

Thus, Figure 2 shows the block encoding process for block-based video encoder with fingerprint insertion. An inter or intra prediction is formed for the block, and subtracted from the block to form a residual block. The residual block is then transformed, using a block transform, to form transform coefficients. The transform coefficients are quantized, to form quantized coefficients. The number of quantized coefficients whose values are non-zero, N, are counted. If N is equal to zero, the block is not coded, and a fingerprint sequence bit is not embedded into this block. If N≠0, the block is coded, and a bit F of the fingerprint sequence is to be embedded into the block. If N % 2 (where % is the modulo operator) is equal to F, no action is necessary to embed bit F into the block, and it is entropy coded. If N % 2 is not equal to F, the block is re-quantized to force a new value of N, such that N % 2 = F and N > 0.

If other blocks in the same macroblock are coded, the non-coding of a block is indicated using a coded block pattern (CBP). If all blocks in the same macroblock are not coded, the macroblock is skipped. If the block is to be coded, the non-zero coefficients are entropy coded using runlength coding.

When re-quantization of the block is necessary, an encoder may choose any method of re-quantizing the block such that the new value of N meets the conditions that N % 2 = F and N > 0. The number of non-zero coefficients in the block may be increased or decreased by one to match the fingerprint signal bit by re-quantizing the block. It is necessary that the re-quantization process not create blocks with no non-zero coefficients, as these blocks will not be coded, and hence the watermark detector would be unable to determine that this block had a fingerprint bit embedded in it. So, if the number of non-zero coefficients in a block is one, the number must be increased rather than decreased.

The value of N may be decreased by one by re-quantizing to zero a transform coefficient that had originally corresponded to a non-zero quantized coefficient. The encoder could choose the lowest value transform coefficient or highest frequency position nonzero coefficient to be re-quantized to zero, for examples, to minimize the effect on compressed video quality.

The value of N may be increased by re-quantizing a zero valued quantized coefficient to a non-zero value, for example - set to 1. The encoder may choose to re-quantize to 1 the transform coefficient in the position that is one higher frequency position in scan order to the last non-zero quantized coefficient of the first quantization stage. In the JVT compression standard, when CAVLC entropy coding is used, trailing ones are efficiently encoded, so adding a non-zero coefficient in this manner will have very little impact on the number of bits required to encode this block. The same strategy can be used with other entropy coding methods, such as CABAC.

A pattern for selecting which coded blocks to embed a fingerprint bit into is pre-determined, and used by the encoder and the fingerprint detector. The first L coded blocks may be used, to encode the L-bit sequence. Alternatively, every Mth coded block, for any pre-determined value of M, could be used to code the L-bit sequence in L * M coded blocks. Other patterns may also be used.

The L-bit fingerprint sequence can be repeated many times in the video sequence, or inserted only once. Once the entire L-bit sequence has been embedded, the fingerprint embedding process can stop until a specified restart point is reached. In a preferred embodiment, the L-bit fingerprint sequence is repeated for every Group of Pictures or IDR.

An encoder may choose to require that the entire L-bit sequence be embedded into some number of video pictures, slices or macroblocks, which corresponds to some number of blocks, B. In a preferred embodiment, the encoder requires that the entire L-bit sequence be encoded in every I picture.

Before encoding of a video picture, while it is known how many blocks the video picture is divided into, it is unknown how many of those blocks will be classified as not coded. Only blocks classified as coded are used for embedding a fingerprint bit. In order to meet the constraint that the entire L-bit fingerprint sequence be embedded into a desired number of blocks, B, the encoder can force blocks that would have originally been not-coded to be coded, so that a fingerprint bit may be embedded into that block. This is done by re-quantizing the block such that its new number of non-zero coefficients N is greater than zero.

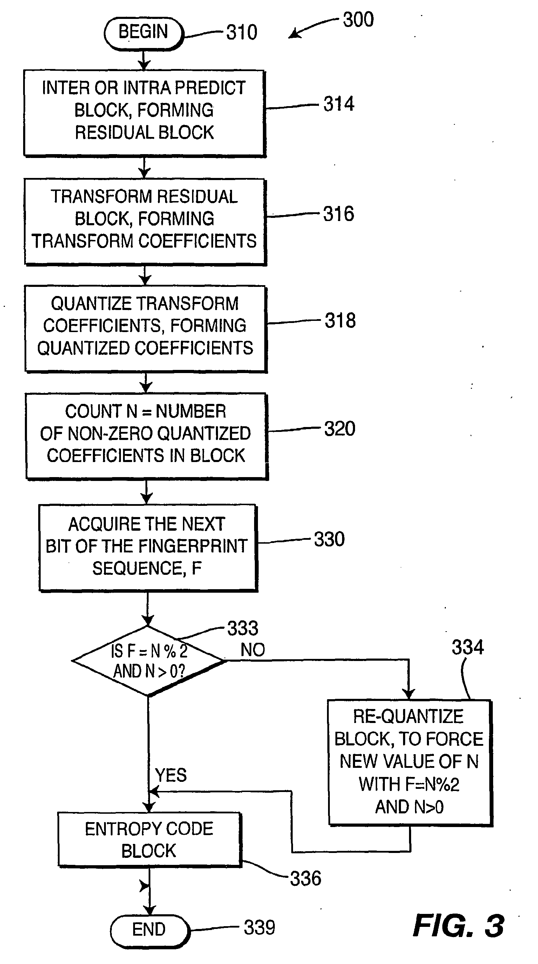

Turning now to Figure 3, a block encoder with forced fingerprint insertion is indicated generally by the reference numeral 300. The block encoder 300 includes a begin block 310 that passes control to function block 314. The function block 314 predicts a block using Intra or Inter prediction, forming a residual block, and passes control to a function block 316. The function block 316, in turn, transforms the residual block, forming transform coefficients, and passes control to a function block 318. The function block 318 quantizes the transform coefficients, forming quantized coefficients, and passes control to a function block 320.

The function block 320, in turn, initializes a variable N to the number of non-zero quantized coefficients in the block, and passes control to a function block 330, which acquires the next bit of the fingerprint sequence F, and passes control to a decision block 333. The decision block 333 checks whether the fingerprint sequence F is equal to N modulo 2 and whether N is greater than zero, and if both conditions are true, passes control to a function block 336 which entropy codes the block, and then passes control to an end block 339. If, however, F is not equal to N modulo 2 or N is not greater than zero, the decision block 333 passes control to a function block 334, which re-quantizes the block to force a new value of N where F is equal to N modulo 2 and N is greater than zero. The function block 334, in turn, passes control to the function block 336, which is described above.

Thus, Figure 3 shows a block encoder with a forced fingerprint insertion. That is, the block is not allowed to be not coded, so that it is guaranteed that the fingerprint bit is embedded in this block. The first few steps are identical to those of Figure 2. An inter or intra prediction is formed for the block, and subtracted from the block to form a residual block. The residual block is then transformed, using a block transform, to form transform coefficients. The transform coefficients are quantized, to form quantized coefficients. The number of quantized coefficients whose values are non-zero, N, are counted. The following steps differ from Figure 2. If N>0 and F = N % 2, the block can be entropy coded. But if those conditions are not met, the block must be re-quantized so that the value of N is changed such that the conditions are met. Unlike in Figure 2, this requantization step can be required if N = 0, i.e., if after the initial quantization the block would not have been coded.

An encoder that is required to embed the entire L-bit fingerprint sequence within B blocks, can keep track of the block count, and the coded block count, cbc. Then when the number of blocks left to encode is no longer greater than the number of fingerprint bits left to embed, the encoder could force the remaining blocks be coded, i.e. not allowed to be classified as not-coded.

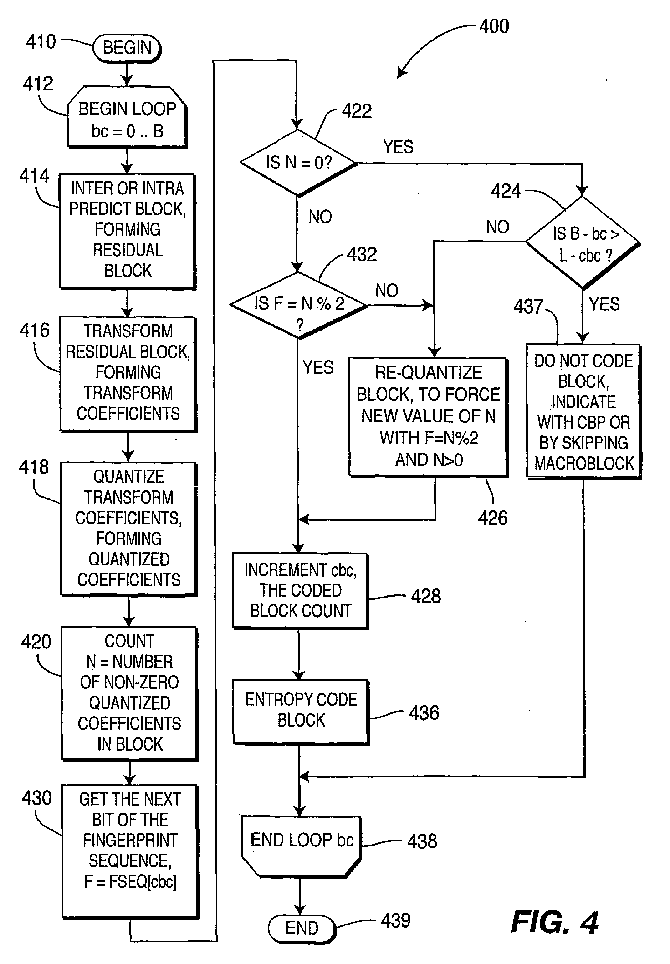

As shown in Figure 4, a block encoder with required fingerprint insertion is indicated generally by the reference numeral 400. The block encoder 400 includes a begin block 410 that passes control to a begin loop block 412, which initializes and later increments a loop counter bc between zero and a maximum value B. The begin loop block passes control to a function block 414. The function block 414 predicts a block using Intra or Inter prediction, forming a residual block, and passes control to a function block 416. The function block 416, in turn, transforms the residual block, forming transform coefficients, and passes control to a function block 418. The function block 418 quantizes the transform coefficients, forming quantized coefficients, and passes control to a function block 420.

The function block 420 initializes a variable N to the number of non-zero quantized coefficients in the block, and passes control to a function block 430. The function block 430 gets the next bit of the fingerprint sequence F = FSEQ[cbc], and passes control to a decision block 422. The decision block 422 checks whether N is zero, and if N is equal to zero, passes control to a decision block 424 which checks whether B minus bc is greater than the number of fingerprint sequence bits (L) minus the coded block count (cbc). If the comparison is true, the decision block 424 passes control to a function block 437, which does not code the block and either indicates the non-coded block with a coded block pattern (CBP) or by skipping the macroblock. The function block 437, in turn, passes control to an end loop block 438, which passes control back to the begin loop block 412 if the loop counter bc has not reached the maximum value B, or passes control to an end block 439 if the loop counter bc has reached the maximum value B. If B minus bc is not greater than L minus cbc, the decision block 424 passes control to the function block 426, which re-quantizes the block to force a new value of N where F is equal to N modulo 2 and N is greater than zero. The function block 426, in turn, passes control to a function block 428. The function block 428 increments the coded block count (cbc), and passes control to a function block 436 which entropy codes the block, and then passes control to the end loop block 438.

If, however, N is not equal to zero, the decision block 422 passes control to a decision block 432. The decision block 432 checks whether the fingerprint sequence F is equal to N modulo 2, and if F is equal to N modulo 2, passes control to the function block 428 described above. If, however, F is not equal to N modulo 2, the decision block 432 passes control to a function block 426, described previously.

Thus, Figure 4 shows an encoder with required fingerprint insertion that loops over the B blocks in a slice or frame, over which the L-bit sequence is required to be embedded. A loop counter bc is used for the block count. For each block, the initial steps are the same as in Figures 2 and 3. An inter or intra prediction is formed for the block, and subtracted from the block to form a residual block. The residual block is then transformed, using a block transform, to form transform coefficients. The transform coefficients are quantized, to form quantized coefficients. The number of non-zero quantized coefficients, N, are counted. If N = 0, a further check is made, if B - bc, which is the number of remaining blocks to be processed, is greater than the L - cbc, which is the number of remaining fingerprint sequence bits to be embedded, in which case the block is not coded. That is, if B - bc > L - cbc, the block is not coded. However, if the B - bc is not greater than L - cbc, the current block must be coded so that a fingerprint bit may be embedded, in order to meet the constraint that all L bits be embedded in the B blocks. The variable cbc is the coded block count, which tracks how many blocks have been coded, i.e., those blocks that were not classified as not coded.

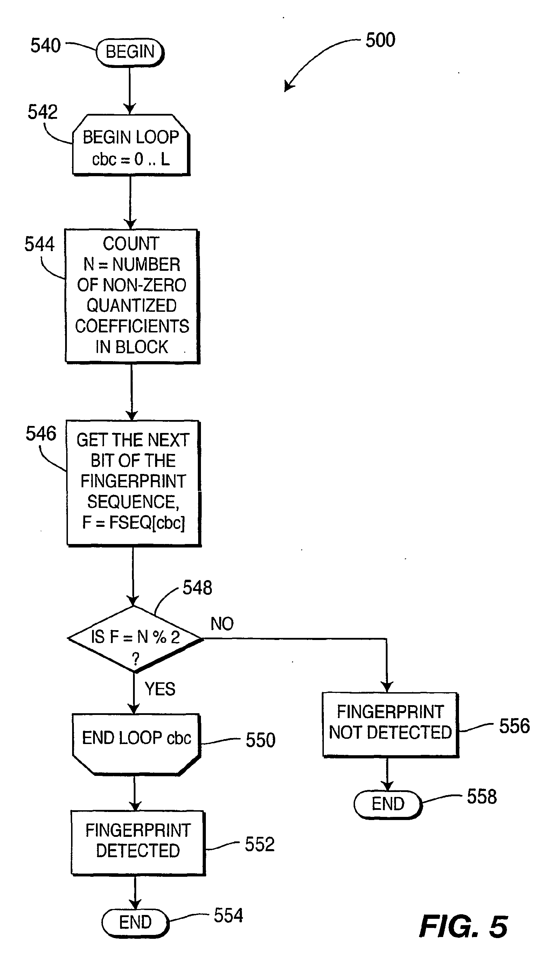

Turning to Figure 5, a fingerprint detector is indicated generally by the reference numeral 500. The fingerprint detector 500 includes a begin block 540, which passes control to a begin loop block 542. The begin loop block 542 initializes a loop variable cbc to zero, and increments it on subsequent iterations up to a maximum value of L. The begin loop block 542 passes control to a function block 544, which sets a count N equal to the number of non-zero quantized coefficients in a block, and passes control to a function block 546. The function block 546, in turn, gets the next bit of the fingerprint sequence, F=FSEQ[cbc], and passes control to a decision block 548. The decision block 548 checks whether F is equal to N modulo 2. If N is not equal to N modulo 2, the decision block 548 passes control to a function block 556, which determines that a fingerprint was not detected, and passes control to an end block 558. If, however, N is equal to N modulo 2, the decision block 548 passes control to an end loop block 550, which passes control back to the begin loop block 542 if the loop variable cbc is not yet equal to L, or otherwise passes control to a function block 552. The function block 552 determines that a fingerprint was detected, and passes control to an end block 554.

Thus, to detect the fingerprint in a compressed video bitstream, the first L coded blocks are tested to see if the embedded watermark bit matches the L-bit fingerprint sequence, FSEQ. If a pattern is used that does not embed a bit in the first-L coded blocks, such as, for example, one that operates on every Mth block, the process could be adjusted to follow that same pattern.

In the fingerprint detector embodiment of Figure 5, the first L coded blocks are looped, with cbc as the loop index. For each block, the number of non-zero quantized coefficients, N, is counted. The next bit of the fingerprint sequence, F = FSEQ[cbc], is then compared to N % 2. If F = N % 2, the loop continues. If at any point in the loop, F # N % 2, the process is ended, and the fingerprint is not detected. If the loop completes with the F = N % 2 condition always being met for the L coded blocks, the process is ended and the fingerprint is detected.

If L is sufficiently large, the odds of an un-fingerprinted compressed bitstream's pattern of number of coded coefficients following the pattern of the fingerprint sequence is quite unlikely, approximately 1 in 2^L. The fingerprint detection of a single group of L coded biocks may fail if the bitstream has been changed in any way from how it was originally created, i.e. if channel errors occurred. To provide a greater degree of reliability, the fingerprint detector could check each GOP or IDR of the coded bitstream for the fingerprint.

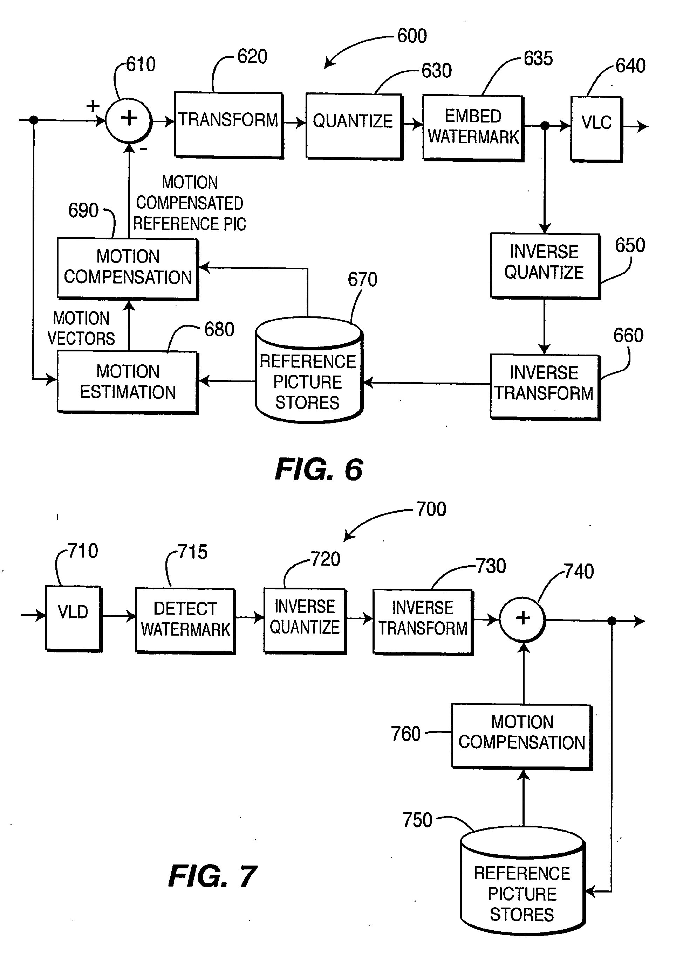

Turning to Figure 6, an exemplary video encoder for fingerprint insertion is indicated generally by the reference numeral 600. An input to the encoder 600 is connected in signal communication with a non-inverting input of a summing junction 610. The output of the summing junction 610 is connected in signal communication with a block transformer 620. The transformer 620 is connected in signal communication with a quantizer 630, alternatively embodying a block encoder for fingerprint insertion, which is connected in signal communication with a watermark embedder 635. As will be recognized by those of ordinary skill in the pertinent art based on the teachings herein, the encoder 600 need only include one of the watermark embedder 635 and the fingerprint insertion portion of the quantizer 630. The output of the embedder 635 is connected in signal communication with a VLC (variable length coder) 640, where the output of the VLC 640 is an externally available output of the encoder 600.

The output of the quantizer 630 is further connected in signal communication with an inverse quantizer 650. The inverse quantizer 650 is connected in signal communication with an inverse block transformer 660, which, in turn, is connected in signal communication with a reference picture store 670. A first output of the reference picture store 670 is connected in signal communication with a first input of a motion estimator 680. The input to the encoder 600 is further connected in signal communication with a second input of the motion estimator 680. The output of the motion estimator 680, which is indicative of motion vectors, is connected in signal communication with a first input of a motion compensator 690. A second output of the reference picture store 670 is connected in signal communication with a second input of the motion compensator 690. The output of the motion compensator 690, which is indicative of a motion compensated reference picture, is connected in signal communication with an inverting input of the summing junction 610.

As shown in Figure 7, an exemplary video decoder for fingerprint detection is indicated generally by the reference numeral 700. The video decoder 700 includes a VLD (variable length decoder) 710 connected in signal communication with a watermark detector 715, which is connected in signal communication with an inverse quantizer 720, alternatively embodying a block decoder for fingerprint detection. As will be recognized by those of ordinary skill in the pertinent art based on the teachings herein, the decoder 700 need only include one of the watermark detector 715 and the fingerprint detection portion of the inverse-quantizer 720. The inverse quantizer 720 is connected in signal communication with an inverse transformer 730. The inverse transformer 730 is connected in signal communication with a first input terminal of a summing junction 740, where the output of the summing junction 740 provides the output of the video decoder 700. The output of the summing junction 740 is connected in signal communication with a reference picture store 750. The reference picture store 750 is connected in signal communication with a motion compensator 760, which is connected in signal communication with a second input terminal of the summing junction 740.

These and other features and advantages of the present invention may be readily ascertained by one of ordinary skill in the pertinent art based on the teachings herein. It is to be understood that the principles of the present invention may be implemented in various forms of hardware, software, firmware, special purpose processors, or combinations thereof.

Most preferably, the principles of the present invention are implemented as a combination of hardware and software. Moreover, the software is preferably implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present invention is programmed. Given the teachings herein, one of ordinary skill in the pertinent art will be able to contemplate these and similar implementations or configurations of the present invention.

## Claims

1. A method (500) of detecting a digital fingerprint embedded in a compressed video bitstream, the method comprising:
receiving (546) the digital fingerprint as a unique identification code having a sequence of bits; **characterized in that** said method further comprises:
identifying (552) each bit of the unique identification code from a corresponding coded block of the compressed video bitstream by comparing the bit value of the unique identification code to the parity of the number of coded coefficients in the corresponding block.

2. A method as defined in Claim 1, further comprising:
counting (542) the length of the sequence of bits;
testing (548) each bit of the sequence of bits up to said length against the parity of the number of coded coefficients in each corresponding block to see if the embedded bits match the fingerprint sequence.

3. A method as defined in Claim 1, further comprising selecting the corresponding coded blocks of the compressed video bitstream to be checked for a bit of the unique identification code in accordance with a selection pattern.

4. A method as defined in Claim 3 wherein the selection pattern comprises every consecutive block up to the number of bits of the unique identification code.

5. A method as defined in Claim 3 wherein the selection pattern comprises every block having at least one non-zero coefficient up to the number of bits of the unique identification code.

6. A method as defined in Claim 3 wherein the selection pattern comprises every Nth block up to the number of bits of the unique identification code.

7. A method as defined in Claim 3 wherein the selection pattern comprises every Nth block having at least one non-zero coefficient up to the number of bits of the unique identification code.

8. A method as defined in Claim 1, further comprising detecting multiple copies of the digital fingerprint in the compressed video bitstream.

9. A method as defined in Claim 8 wherein a new copy of the digital fingerprint is detected for every Group of Pictures or Independent Decoder Refresh period.

10. A method as defined in Claim 1 wherein the coded block is at least one of a block, slice, macroblock, and picture.

11. A method as defined in Claim 3 wherein the entire selection pattern is repeated within every intra-coded picture.

12. A video decoder (700) for detecting a digital fingerprint embedded in a compressed video bitstream, the decoder comprising:
a detection unit (715) for detecting bits of the digital fingerprint in blocks of the video bitstream as a function of the parity of the number of coded coefficients in the block; **characterized in that** said decoder further comprises:
an inverse-quantization unit (720) in signal communication with the detection unit for inverse-quantizing coefficients of the video bitstream.

## Patentansprüche

1. Verfahren (500) zum Erkennen eines digitalen, in einem komprimierten Video-Bitstrom eingebetteten Fingerabdrucks, umfassend:
Empfangen (546) des digitalen Fingerabdrucks als eindeutigen Identifizierungs-Code, der eine Bitsequenz aufweist, **dadurch gekennzeichnet, dass** das Verfahren ferner umfasst:
Identifizieren (552) jedes Bits des eindeutigen Identifizierungs-Codes aus einem entsprechenden kodierten Block des komprimierten Video-Bitstroms durch Vergleichen des Bitwertes des eindeutigen Identifizierungs-Codes mit der Parität der Zahl von kodierten Koeffizienten in dem entsprechenden Block.

2. Verfahren nach Anspruch 1, ferner umfassend:
Zählen (542) der Länge der Bitsequenz;
Prüfen (548) jedes Bits der Bitsequenz bis hinauf zu der Länge auf die Parität der Zahl von kodierten Koeffizienten in jedem entsprechenden Block, um zu sehen, ob die eingebetteten Bits mit der Finderabdrucksequenz übereinstimmen.

3. Verfahren nach Anspruch 1, das ferner das Auswählen der entsprechenden kodierten Blöcke des komprimierten Video-Bitstroms zur Prüfung auf ein Bit des eindeutigen Identifizierunge-Codes gemäß einem Auswahlmuster umfasst.

4. Verfahren nach Anspruch 3, bei dem das Auswahlmuster alle aufeinanderfolgenden Blöcke bis hinauf zu der Zahl von Bits des eindeutigen Identifizierungs-Codes umfasst.

5. Verfahren nach Anspruch 3, bei dem das Auswahlmuster alle Blöcke mit wenigstens einem Koeffizienten ungleich null bis hinauf zu der Bitzahl des eindeutigen Identifizierungs-Codes umfasst.

6. Verfahren nach Anspruch 3, bei dem das Auswahlmuster jeden Nten Block bis hinauf zur Bitzahl des eindeutigen Identifizierungs-Codes umfasst.

7. Verfahren nach Anspruch 3, bei dem das Auswahlmuster jeden Nten Block mit wenigstens einem Koeffizienten ungleich null bis hinauf zur Bitzahl des eindeutigen Identifizierungs-Codes umfasst.

8. Verfahren nach Anspruch 1, das ferner die Erkennung von Mehrfachkopien des digitalen Fingerabdrucks in dem komprimierten Video-Bitstrom umfasst.

9. Verfahren nach Anspruch 8, bei dem eine neue Kopie des digitalen Fingerabdrucks für jede Gruppe von Bildern oder unabhängigen Dekodierer-Auffrischungsperioden erkannt wird.

10. Verfahren nach Anspruch 1, bei dem der kodierte Block wenigstens eines der Elemente ist: ein Block, eine Scheibe (slice), ein Makroblock, ein Bild.

11. Verfahren nach Anspruch 3, bei dem das ganze Auswahlmuster in jedem intra-kodierten Bild wiederholt wird.

12. Video-Dekodierer (700) zum Erkennen eines in einem komprimierten Video-Bitstrom eingebetteten digitalen Fingerabdrucks, umfassend eine Erkennungseinheit (715) zum Erkennen von Bits des digitalen Fingerabdrucks in Blöcken des Video-Bitstroms als Funktion der Parität der Zahl von kodierten Koeffizienten in dem Block, **dadurch gekennzeichnet, dass** der Dekodierer ferner umfasst:
eine Einheit (720) zur inversen Quantisierung in Signalkommunikation mit der Erkennungseinheit für invers quantisierende Koeffizienten des Video-Bitstroms.

## Revendications

1. Procédé (500) de détection d'une empreinte digitale numérique incluse dans un flux binaire vidéo comprimé, le procédé comprenant :
la réception (546) d'une empreinte digitale numérique comme code d'identification unique comportant une séquence binaire ; **caractérisé en ce que** ledit procédé comprend en outre :
l'identification (552) de chaque bit du code d'identification unique à partir d'un bloc codé correspondant du flux binaire vidéo comprimé en comparant la valeur binaire du code d'identification unique à la parité du nombre de coefficients codés dans le bloc correspondant.

2. Procédé selon la revendication 1, comprenant en outre :
le comptage (542) de la longueur de la séquence binaire ;
le test (548) de chaque bit de la séquence binaire jusqu'à ladite longueur par rapport à la parité du nombre de coefficients codés dans chaque bloc correspondant pour voir si les bits inclus correspondent à la séquence de l'empreinte digitale.

3. Procédé selon la revendication 1, comprenant en outre la sélection dans les blocs codés correspondants du flux binaire vidéo comprimé à vérifier d'un bit du code d'identification unique selon un modèle de sélection.

4. Procédé selon la revendication 3 dans lequel le modèle de sélection comprend chaque bloc consécutif jusqu'au nombre de bits du code d'identification unique.

5. Procédé selon la revendication 3 dans lequel le modèle de sélection comprend chaque bloc comportant au moins un coefficient différent de zéro jusqu'au nombre de bits du code d'identification unique.

6. Procédé selon la revendication 3 dans lequel le modèle de sélection comprend chaque Ni^{éme} bloc jusqu'au nombre de bits du code d'identification unique.

7. Procédé selon la revendication 3 dans lequel le modèle de sélection comprend chaque Ni^{ème} bloc comportant au moins un coefficient différent de zéro jusqu'au nombre de bits du code d'identification unique.

8. Procédé selon la revendication 1, comprenant en outre la détection de copies multiples de l'empreinte digitale numérique dans le flux binaire vidéo comprimé.

9. Procédé selon la revendication 8 dans lequel une nouvelle copie de l'empreinte digitale numérique est détectée pour chaque période de groupe d'images ou actualisation de décodeur indépendant.

10. Procédé selon la revendication 1 dans lequel le bloc codé est au moins un parmi un bloc, une section, un macrobloc et une image.

11. Procédé tel que défini dans la revendication 3 dans lequel le modèle de sélection total est répété dans chaque image intra-codée.

12. Décodeur vidéo (700) permettant de détecter une empreinte digitale numérique incluse dans un flux binaire vidéo comprimé, le décodeur comprenant :
une unité (715) de détection permettant de détecter des bits de l'empreinte digitale numérique dans des blocs de flux binaire vidéo en fonction de la parité du nombre de coefficients codés dans le bloc ; **caractérisé en ce que** ledit décodeur comprend en outre :
une unité (720) de quantification inverse en communication par signal avec l'unité de détection pour une quantification inverse des coefficients du flux binaire vidéo.
